# EUROPEAN PATENT APPLICATION

(11) **EP 4 383 145 A1**
(43) Date of publication of application: **12.06.2024**
(21) Application number: 22383200.7
(22) Date of filing: 09.12.2022
(51) Int. Cl.: G06N 10/60, G06N 3/02

(54) **METHOD FOR GENERATING DATA INDICATIVE OF A DIGITAL TWIN**

(71) Applicant: Multiverse Computing S.L., 20009 Donostia (ES)
(72) Inventor: Orús, Román, 20009 Donostia (ES); Hernández, Rodrigo, 20009 Donostia (ES)
(74) Representative: Balder IP Law, S.L.

(57) **Abstract**

The disclosure relates to a method (100) for generating data indicative of a digital twin of a physical system (2), the method comprising:
- receiving (120), by at least one quantum computing device (11), data acquirable from the physical system (2); and
- processing (130), by the at least one quantum computing device (11), the data acquirable from the physical system (2) to provide the data indicative of the digital twin.

The disclosure also relates to a device or system adapted to execute the method, to at least one computing device configured to execute the steps of the method and to a computer program product having instructions for executing the method.

## Description

### TECHNICAL FIELD

The present disclosure is encompassed within the field of generation of data indicative of a digital twin of a physical system.

### STATE OF THE ART

A digital twin of a physical system is an estimated virtual representation of the physical system. It is known that digital twins have many applications, such as monitoring the physical system and simulating the physical system. A particular application is the generation of real-time digital twins of physical systems. However, for some digital twins, the latency of the generation of the digital twin is too high to be considered real-time for certain applications.

In addition, some physical systems are too complex to be able to generate, by means of a method know in the art, a digital twin which accurately behaves like the physical system. This issue is frequent in physical systems comprising a huge number of components and in physical systems comprising a huge number of physical parameters which have a significant impact on the behavior of the physical system.

Therefore, it would be advantageous to generate data indicative of a digital twin of a complex physical system in a quick manner.

### SUMMARY

A first aspect of the disclosure relates to a method for generating data indicative of a digital twin of a physical system, the method comprising:
- receiving, by at least one quantum computing device, data acquirable from the physical system; and
- processing, by the at least one quantum computing device, the data acquirable from the physical system to provide the data indicative of the digital twin.

Thereby, the method allows taking advantage of quantum computing for generating data indicative of a digital twin at a relatively high speed compared to other methods relying on mere digital computing. Thereby, the method allows enhancing the quality of the data indicative of the digital twin and decreasing the processing time required for obtaining the data indicative of the digital twin. For example, the method allows obtaining data indicative of a digital twin in real-time, the data having higher quality (e.g. reflecting the physical behavior of the physical system in a more accurate manner) compared to the data generated by other methods relying on mere digital computing.

The method may be applied to a broad range of physical systems. Examples of the physical system are: a vehicle, an industrial process, a robotic system, a biological system, an image processing system and an information system. Particular examples of the physical system are: manufacturing equipment of one or more factories, and containers storing fluid.

The data acquirable from the physical system may be used in the step of processing, by the at least one quantum computing device, by at least one of:
- applying an algorithm to the data acquirable from the physical system and
- adjusting an algorithm (e.g. at least one of: adjusting an operation comprised by the algorithm and adjusting a value comprised by the algorithm, the value being subjected to an operation comprised by the algorithm) to be implemented by the at least one quantum computing device.

In some embodiments, the method comprises generating the digital twin based on the data indicative of the digital twin. Thereby, the method allows, for example: generating a digital twin of the physical system in a current moment, estimating a future value of a physical parameter of the physical system or simulating the physical system based on the data acquirable from the physical system. For example, the method allows generating a digital twin in real-time, the digital twin having higher quality (e.g. responding quicker and more accurately to updates of the data acquirable from the physical system) compared to digital twins generated by other methods relying on mere digital computing.

In some embodiments, the step of processing comprises at least one of: computing an algorithm of quantum optimization and computing a machine learning model. The machine learning model is an algorithm which provides an output upon application of the algorithm to data acquirable from the physical system, the output being data indicative of a digital twin of the physical system. The machine learning model may be a quantum machine learning model, for example, a machine learning model using a variational quantum circuit. The use of a quantum algorithm (e.g. a quantum machine learning model) is enabled because of the use of the at least one quantum computing device. The machine learning model may be a classical machine learning model, for example, a machine learning model using a neural network.

Some examples of the algorithm of quantum optimization are: algorithms of quantum annealing, variational quantum eigensolvers, quantum approximate optimization algorithms, algorithms of non-orthogonal variational quantum optimization and algorithms of continuous quantum variational optimization.

A model of the digital twin is a model defining a physical behavior of the physical system. The model allows estimating an output of the physical system, the physical system being subjected to physical parameters having certain values, by applying the model to certain data acquirable from the physical system, the certain data being indicative of the physical parameters having the certain values.

The algorithm of quantum optimization may be configured to provide, when applied to data acquirable from the physical system, at least one of: data indicative of an optimized configuration of the digital twin and data indicative of an optimized model of the digital twin. The data indicative of an optimized configuration of the digital twin is data indicative of an estimation of an optimized configuration of the physical system. The data indicative of an optimized model of the digital twin is, for example, data indicative of a model which has at least one of: an optimized execution time and an optimized accuracy of representation of the physical behavior of the physical system.

In some embodiments, the step of computing a machine learning model comprises training the machine learning model. The training of the machine learning model may be based on the data acquirable from the physical system. The training of the machine learning model allows increasing training speed and enhancing quality (e.g. the accuracy) of the data indicative of a digital twin of the physical system compared to a method relying on mere digital computing.

In some embodiments, the step of computing a machine learning model comprises inputting data acquirable from the physical system into the machine learning model so that an output of the machine learning model is obtained. The machine learning model is an algorithm which provides an output upon application of the algorithm to data acquirable from the physical system, the output being data indicative of a digital twin of the physical system. Thereby, the computing of the machine learning model by the at least one quantum computing device may allow obtaining data indicative of a digital twin of the physical system, the data indicative of the digital twin having relatively high quality and being obtained in a relatively quick manner when compared to other machine learning algorithms performed merely by classical computing.

Some examples of the quantum machine learning model are: quantum boost algorithms for classification in quantum annealers and universal quantum computers, models of quantum support vector machine, models of variational quantum classifiers, quantum clustering algorithms and models of quantum neural networks.

In some embodiments, the method comprises processing, by at least one computing device, first data acquirable from the physical system to reduce a dimensionality of the first data thereby obtaining second data; the at least one computing device being additional to the at least one quantum computing device; the second data being the data acquirable from the physical system received in the step of receiving. Thereby, the dimensionality of the data received by the at least one quantum computing device is decreased. Data having reduced dimensionality (and hence, data having lower size) can be sent quicker to the at least one quantum computing device compared to data having a relatively higher dimensionality (and hence, data having higher size). In addition, since the dimensionality reduction takes place before the at least one quantum computing device receives the data and is performed by the at least one computing device additional to the at least one quantum computing device, the dimensionality reduction can be performed in parallel with computations performed by the at least one quantum computing device, thereby increasing speed of generation of the data indicative of the digital twin.

An example of reduction of dimensionality comprises processing data acquirable from a physical system for generating a particular label depending on a physical feature derivable from the data acquirable from the physical system. For example, if the data acquirable from the physical system is an image, the dimensionality of the image can be reduced by processing the image so that a label (e.g. a first label, a second label or a third label) is generated depending on a defect shown in the image, the label having lower size than the image. Thereby, the at least one quantum computing device receives the label (e.g. the first label, the second label or the third label) instead of the whole data of the image.

In some embodiments, the data received by the at least one quantum computing device in the step of receiving is based on data acquired by at least one sensor. The data acquirable from the physical system may be received by the at least one quantum computing device directly from the sensor, from a server in which the data is stored prior to sending the data to the at least one quantum computing device or via a communications module.

In some embodiments, the reduction of dimensionality of data acquired by a first sensor of the at least one sensor is performed independently from data acquired by a second sensor of the at least one sensor, and a reduction of dimensionality of the data acquired by the second sensor is performed independently from the data acquired by the first sensor. In this way, the reduction of dimensionality of data acquired by the first sensor does not depend on data acquired by the second sensor and hence the dimensionality can be decreased without depending on the data acquired by the second sensor (e.g. without having to wait for acquiring the data by the second sensor and without relying on quality of data acquired by the second sensor). Thereby, the reduction of dimensionality of the data acquired by the first sensor is performed independently from the reduction of dimensionality of the data acquired by the second sensor, so that reception of data having a reduced dimensionality by the at least one quantum computing device can be performed in a relatively more reliable manner from several sensors. In this way, data indicative of a digital twin having higher complexity may be provided while minimizing the reduction of accuracy of the data indicative of the digital twin.

In some embodiments, the data received by the at least one quantum computing device in the step of receiving has been encrypted with post-quantum cryptography (i.e. cryptography being particularly resistant to quantum computing) by at least one computing device; the at least one computing device being additional to the at least one quantum computing device. Thereby, the data received by the at least one quantum computing device is more protected against eavesdropping attacks which may occur along the transmission path of the encrypted data to the at least one quantum computing device. These embodiments allow increasing security of transmission of the data and may be particularly advantageous, for example, if the data is sent to the at least one quantum computing device through a public network or through a relatively unsecure network.

In some embodiments, the at least one computing device which encrypts the data with post-quantum cryptography is the at least one computing device which reduces a dimensionality of the first data acquirable from the physical system. Thereby, the required number of computing devices may be minimized since the same at least one computing device performs the dimensionality reduction and the encryption.

In some embodiments, the at least one computing device which encrypts the data with post-quantum cryptography is not the at least one computing device which reduces a dimensionality of the first data acquirable from the physical system. Hence, at least one computing device performs the encryption of data and another at least one computing device performs the reduction of dimensionality. Thereby, the encryption and the reduction of dimensionality can be performed quicker since the computing device(s) involved in the encryption are different from the computing device(s) involved in the reduction of dimensionality.

In some embodiments, the at least one quantum computing device is configured to process, in the step of processing to provide the data indicative of the digital twin, the data acquirable from the physical system, the data acquirable from the physical system being encrypted with post-quantum cryptography. Thereby, it is not required to decrypt the data acquirable from the physical system before processing the data by the at least one quantum computing device, enabling a quick and secure performance of the method for generating data indicative of a digital twin of a physical system.

In some embodiments, at least one of:
- the at least one sensor,
- the at least one computing device which processes the first data acquirable from the physical system to reduce a dimensionality of the first data and
- the at least one computing device which encrypts the data with post-quantum cryptography
is in premises; the at least one quantum computing device being remotely located from the premises. The remote location of the at least one quantum computing device allows using the at least one quantum computing device for generating a digital twin of a physical system which has components separated by long distances. The encryption with the post-quantum cryptography is particularly advantageous in these embodiments because it allows using a relatively unsecure network (hence allowing decreasing the cost and resources required by the network) for sending the data acquirable from the physical system to the at least one quantum computing device while minimizing the negative impact on data security.

In some embodiments, the data indicative of the digital twin comprises data indicative of an estimation of an anomaly and a non-anomaly of the physical system. Thereby, the method allows providing data which warns of a presence of an anomaly of the physical system.

In some embodiments, the data indicative of the digital twin comprises data indicative of a reconfiguration of a model of the digital twin. Thereby, the method allows enhancing the model of the digital twin based on the data received by the at least one quantum computing device. For example, the enhanced model may be a model which provides more accurate estimations of the physical behavior of the physical system.

In some embodiments, the data indicative of the digital twin comprises data indicative of a reconfiguration of a physical parameter of the physical system, the physical parameter having a digital counterpart in the digital twin; the digital counterpart being reconfigurable. In this way, the method allows obtaining reconfiguration data for adjusting (e.g. enhancing) the physical system.

In some embodiments, the method comprises at least one of: reconfiguring the model of the digital twin based on the data indicative of a reconfiguration of a model of the digital twin and reconfiguring a physical parameter of the physical system based on the data indicative of a reconfiguration of a physical parameter.

A second aspect of the disclosure relates to a method of supervising a physical system, the method comprising the method of the first aspect of the disclosure.

A third aspect of the disclosure relates to a device or system comprising means adapted to execute the steps of the method of the first aspect of the disclosure.

A fourth aspect of the disclosure relates to at least one computing device configured to execute the steps of the method of the first aspect of the disclosure.

A fifth aspect of the disclosure relates to a computer program product that has instructions which, when the program is executed by at least one computing device, cause the at least one computing device to carry out the steps of the method of the first aspect of the disclosure.

The different aspects and embodiments of the disclosure defined in the foregoing may be combined with one another, as long as they are compatible with each other.

Similar advantages as those described for the first aspect of the disclosure are also applicable to the second, third, fourth and/or fifth aspects of the disclosure.

Additional advantages and features of the disclosure will become apparent from the detailed description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate an embodiment of the disclosure, which should not be interpreted as restricting the scope of the disclosure, but just as an example of how the disclosure can be carried out. The drawings comprise the following figures:
Figure 1 diagrammatically shows a system in accordance with embodiments.
Figure 2 diagrammatically shows a system in accordance with embodiments.
Figure 3 diagrammatically shows a method in accordance with embodiments.

### DETAILED DESCRIPTION

The following description is not to be taken in a limiting sense but is given solely for the purpose of describing the broad principles of the disclosure. Embodiments of the disclosure will be described by way of example, with reference to the above-mentioned drawings.

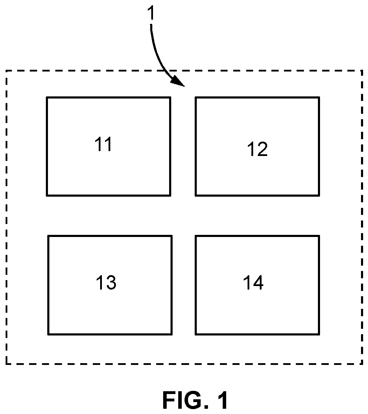

Figure 1 shows a system 1 for generating data indicative of a digital twin of a physical system. Methods according to the present disclosure can be carried out by the system 1.

The system 1 provides data indicative of a digital twin based on data acquirable from the physical system and quantum computing. The digital twin is related to a physical system which may be monitored.

The system 1 comprises at least one quantum computing device 11. The system 1 comprises a module 12. The at least one quantum computing device 11 receives data acquirable from the physical system via the module 12. The module 12 comprises at least one of: a communications module and at least one sensor. The system 1 may comprise a converter of signals for a classical computing device into signals for the at least one quantum computing device. For example, the converter may be comprised by the communications module and/or by the at least one quantum computing device 11.

The system 1 may comprise a converter of signals for the at least one quantum computing device 11 into signals for a classical computing device. For example, the converter may be comprised by the communications module and/or by the at least quantum computing device 11.

The system 1 may also comprise at least one of the following: at least one classical computing device 13 and a memory 14. The at least one classical computing device 13 may be, for example, a CPU, a GPU, an FPGA, an ASIC, a personal computer, a laptop, etc. The memory 14 may comprise at least one of: data acquirable from the physical system and data based on a result of processing, by the at least one quantum computing device 11, data acquirable from the physical system.

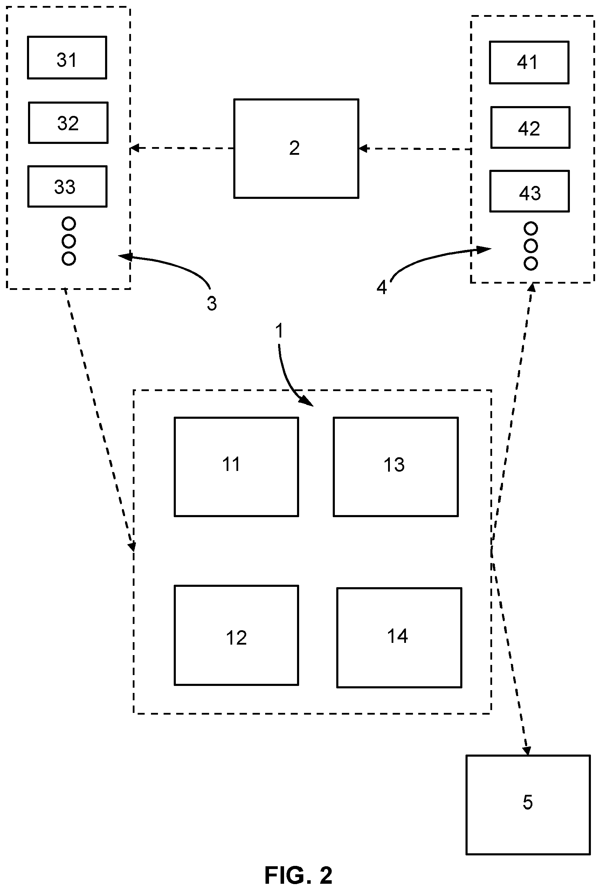

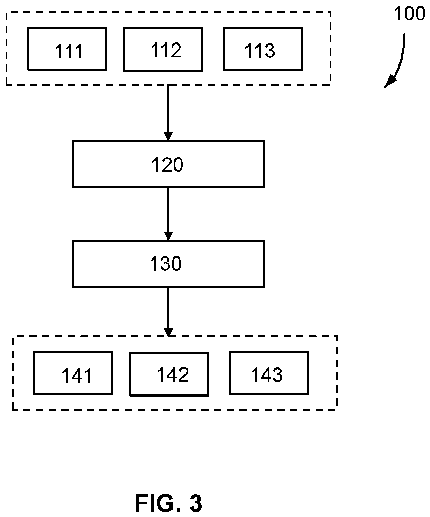

Figure 2 shows the system 1 in combination with a physical system 2, an input system 3, an output system 4 and a user interface 5. Figure 3 shows a method 100 for generating data indicative of a digital twin.

The input system 3 acquires data from the physical system 2 and/or stores data acquirable from the physical system 2. The input system 3 comprises at least one device, for example, at least one of: a sensor 31, a server 32, a camera 33, a PLC, and an loT device. The input system 3 is connected to the system 1 via a communications module (not shown in figure 2) common to several devices of the input system 3 or via several communications modules, each communications module of the several communications modules being specific for each device of the input system 3. The input system 3 may exchange data with the system 1 via the communications module(s) of the input system 3 and the communications module of the system 1. Thereby, system 1 may receive data indicative of the physical system 2 via the devices of input system 3.

The sensor 31 may be any sensor which responds to a physical stimulus from the physical system 2, the physical stimulus being, for example, heat, light, sound, pressure, electrical energy (e.g. voltage), magnetism or motion. The sensor 31 is, for example, a temperature sensor, a pressure sensor, a light sensor, a pH sensor, an accelerometer, etc. The camera 33 is configured to capture images from the physical system 2. The server 32 may store data acquirable from the physical system 2. The PLC may comprise a sensor configured to acquire data from the physical system 2. The loT device may comprise a sensor configured to acquire data from the physical system 2. The data acquired by the sensor 31, the images captured by the camera 33, the data stored in the server 32, the data acquired by the sensor of the PLC device and the data acquired by the sensor of the loT device may be communicated to at least one computing device of the input system 3. The at least one computing device of the input system 3 (not shown in figure 2) may receive data acquired by several devices of the input system 3 and/or each device of the input system 3 may have its own computing device. For example, images captured by the camera 33 may be communicated to a computing device of the camera 33. Data acquired by the sensor of the PLC may be communicated to a computing device of the PLC. Data acquired by the sensor of the loT device may be communicated to a computing device of the loT device. Data stored in the server 32 may be communicated to a computing device of the server 32.

The processing performed by the at least one computing device of the input system 3 may be dependent on the processing capacity (e.g. at least one of clock cycle and number of instructions performed per clock cycle) of the respective computing device. For example, the at least one computing device of the input system 3 may be configured to encrypt 111 data by applying post-quantum cryptography to the data, in particular to data acquired from the physical system 2 via at least one of: the sensor 31, the server 32, the camera 33, the PLC and the loT node. The encryption may be performed before the data is transmitted from the input system 3 to the system 1, so that security of the transmitted data is enhanced against eavesdropping attacks which may target the data sent from the input system 3 to the system 1.

The at least one computing device of the input system 3 may be configured to decrease a dimensionality of the data received, by the at least one computing device of the input system 3, from one or more devices of the input system 3 by processing the data, the processing may comprise at least one of:
- applying signal smoothing 112 to a raw signal received from an input device of the input system 3 and
- labelling 113 (e.g. labelling as at least one of: anomalous data, missing data values and faulty data) the data received from the one or more devices of the input system 3 (e.g. labelling by means of applying a tensorized convolutional neural network to images captured by the camera 33);

The devices of the input system 3 may be configured to apply a federated learning algorithm.

The system 1 may be remotely located from premises in which the input system 3 is located. The at least one quantum computing device 11 may process the data received by the system 1 performing some of the steps of the method shown in figure 3.

The at least one quantum computing device 11 receives 120 the data from the input system 3. The at least one quantum computing device 11 uses the received data in the processing 130 by applying algorithms, for example quantum algorithms, thereby providing data indicative of the digital twin of the physical system 2. Thereby, at least one of the following is performed:
- providing 141 data used in the generation of the digital twin (e.g. data indicative of a value of a parameter of the digital twin, the parameter of the digital twin having a counterpart being a physical parameter of the physical system 2);
- providing 142 data indicative of a reconfiguration of the model of the digital twin; and
- providing 143 data indicative of a reconfiguration of a physical parameter of the physical system 2, the physical parameter having a digital counterpart in the digital twin; the digital counterpart being reconfigurable within the digital twin.

For example, the data used in the generation of the digital twin is obtained by using the received data in the performance, by the at least one quantum computing device 11, of a machine learning algorithm, for example, a quantum machine learning algorithm; an output of the performance being an estimation of a prediction of a parameter of the digital twin, the parameter of the digital twin having a counterpart being a physical parameter of the physical system 2. More particularly, the output of the performance may be an estimation of a prediction of a value of a physical parameter of the physical system 2. An example of a physical parameter is at least one of: length, mass, voltage, temperature, luminous intensity, an amount of substance, time and a combination of two or more of length, mass, voltage, temperature, luminous intensity, an amount of substance and time.

In examples, the physical system 2 comprises at least one windmill, and the method 100 comprises generating a digital twin of the at least one windmill based on the data indicative of the digital twin. The data indicative of the digital twin may comprise an estimation of energy to be generated in the future by the at least one windmill. The data indicative of the digital twin is provided by processing, by the at least one quantum computing device 11, data indicative of physical parameters of the at least one windmill and data indicative of climate conditions of a region where the at least one windmill is installed or near the region, for example, data indicative of wind speed. The data indicative of climate conditions may be acquired by at least one sensor located in the region or near the region.

The processing by the at least one quantum computing device 11 may comprise performing a quantum machine learning algorithm, wherein the quantum machine learning algorithm is at least one of:
- based on the data indicative of physical parameters of the at least one windmill and on the data of climate conditions, and
- performed on the data of physical parameters of the at least one windmill and on the data indicative of climate conditions.

In examples, the data used in the generation of the digital twin is obtained by using the received data in the performance, by the at least one quantum computing device 11, of a quantum machine learning algorithm; an output of the performance being data indicative of an anomaly and a non-anomaly of the physical system 2.

In examples, the data indicative of a reconfiguration of the model of the digital twin is obtained by using the received data in the performance, by the at least one quantum computing device 11, of a quantum optimization; an output of the performance being data indicative of a reconfiguration of the model of the digital twin. The output comprises, for example, data for reconfiguring the model.

Next, examples of the quantum optimization is explained, the examples being of quantum boost. These examples are non-limiting in the sense that, for example, the at least one quantum computing device may implement other algorithms and that the at least one quantum computing device 11 may use other technologies (e.g. a quantum computer relying on superconductor technology).

In examples of quantum boost, a performance of a set of classifiers is improved by implementing a boosting strategy in which weighting factors that weight the set of classifiers are optimized. The model of the digital twin is based on the boosted classifier resulting from the quantum boost. In particular, the weighting factors are optimized by minimizing a predefined cost function based on the received 120 data as follows:
radiating a vacuum chamber comprising an ensemble of neutral atoms with a laser so as to trap atoms of the ensemble of neutral atoms in an array of optical tweezers, thereby providing a quantum register, and each optical tweezer comprising a single neutral atom;
digitally configuring at least one laser parameter for implementing one or more unitary operations for initializing states of the neutral atoms, wherein the one or more unitary operations are dependent at least upon the at least one laser parameter, and wherein the configuration of the at least one laser parameter is based on the received 120 data;
radiating the ensemble of atoms with laser light so as to excite at least some atoms of the quantum register, with a laser being operated in accordance with the at least one laser parameter to implement one or more unitary operations;
reading the quantum register with optical means, thereby obtaining a string of bits based on an amount of light produced by the atoms, thus mapping binary values of the weighting factors of the classifiers to a state of qubits in the quantum register;
using the string of bits to compute the cost function;
updating, for reducing the cost function, the at least one laser parameter of the laser by an optimization algorithm until the weighting factors are optimized (e.g. by implementing a QAOA routine such the QAOA routine described in "A Quantum Approximate Optimization Algorithm; Edward Farhi, Jeffrey Goldstone, Sam Gutmann; arXiv: 1411.4028 (2014)");
digitally storing a result of the cost function as last computed; and
setting, by one or more processing devices, a boosted classifier based on the optimized weighting factors.

The boosted classifier is the data indicative of a reconfiguration of the model of the digital twin. For example, the boosted classifier may be part of a model resulting from the reconfiguration of the model of the digital twin.

In some of these examples of quantum boost, the update, for reducing the cost function, of the at least one laser parameter of the laser is based on the data acquirable from the physical system 2, so that one or more unitary operations implemented by the laser are based on the data acquirable from the physical system 2.

In examples, the data indicative of a reconfiguration of a physical parameter of the physical system 2 is obtained by using the received data in the performance, by the at least one quantum computing device 11, of a quantum optimization; an output of the performance being data indicative of a reconfiguration of a physical parameter of the physical system 2. The physical parameter may be reconfigured by an actuator of the physical system 2 via sending the actuator a signal based on the data indicative of a reconfiguration of a physical parameter. For example, a PLC may be reconfigured based on the data indicative of a reconfiguration of a physical parameter to improve quality of production of a manufacturing process as well as minimizing scrap generated in the manufacturing process.

Figure 2 shows an output system 4 comprising output devices. The output system 4 interacts with the physical system 2 based on data received from the system 1. The output system 4 comprises at least one device, for example, at least one of: a control device 41, a server 42, an actuator 43, a PLC and an loT device. The output system 4 is connected to the system 1 via a communications module (not shown in figure 2) common to several devices of the output system 4 or via several communications modules, each communications module of the several communications modules being specific for each device of the output system 4. The output system 4 may exchange data with the system 1 via the communications module(s) of the output system 4 and the communications module of the system 1. Thereby, the system 1 may cause an interaction with the physical system 2 via the devices of output system 4.

The control device 41 may be any control device which controls a physical parameter of the physical system 2, the physical parameter being, for example, heat, light, sound, pressure, magnetism or motion. The control device 41 is, for example, a temperature controller, a pressure controller, a light controller, a pH controller, an acceleration controller, etc. The PLC may control an actuator configured to operate within the physical system 2. The server 42 may store data received from the system 1. The loT device may comprise an actuator configured to operate within the physical system 2.

The data received by the output system 4 from the system 1 may be encrypted with post-quantum cryptography. Each device of the output system 4 may comprise a computing device configured to decrypt the data received from the system 1, so that the output devices of the output system 4 process and/or store the decrypted data.

As shown in figure 2 a user interface 5 comprising a display may receive data from the system 1. The data received by the user interface 5 may be data indicative of a digital twin of the physical system 2. The user interface 5 may generate a visual representation of a digital twin on the display based on the data indicative of the digital twin received by the user interface 5.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the disclosure as defined in the claims.

## Claims

1. A method (100) for generating data indicative of a digital twin of a physical system (2), the method (100) comprising:
- receiving (120), by at least one quantum computing device (11), data acquirable from the physical system (2); and
- processing (130), by the at least one quantum computing device (11), the data acquirable from the physical system (2) to provide the data indicative of the digital twin.

2. The method of claim 1, comprising generating the digital twin based on the data indicative of the digital twin.

3. The method of any one of the previous claims, the step of processing (130) comprising at least one of: computing an algorithm of quantum optimization and computing a machine learning model.

4. The method of any one of the previous claims, comprising processing, by at least one computing device, first data acquirable from the physical system (2) to reduce a dimensionality of the first data thereby obtaining second data; the at least one computing device being additional to the at least one quantum computing device (11); the second data being the data acquirable from the physical system (2) received in the step of receiving (120).

5. The method of any one of the previous claims, wherein the data received by the at least one quantum computing device (11) in the step of receiving (120) has been encrypted (111) with post-quantum cryptography by at least one computing device; the at least one computing device being additional to the at least one quantum computing device (11).

6. The method of any one of the previous claims, wherein the data received by the at least one quantum computing device (11) in the step of receiving (120) is based on data acquired by at least one sensor.

7. The method of any one of claims 4-6, wherein at least one of:
- the at least one sensor,
- the at least one computing device which processes the first data acquirable from the physical system (2) to reduce a dimensionality of the first data and
- the at least one computing device which encrypts the data with post-quantum cryptography
is in premises; the at least one quantum computing device (11) being remotely located from the premises.

8. The method of any one of the previous claims, the data indicative of the digital twin comprising data indicative of an estimation of an anomaly and a non-anomaly of the physical system (2).

9. The method of any one of the previous claims, the data indicative of the digital twin comprising data indicative of a reconfiguration of a model of the digital twin.

10. The method of any one of the previous claims, the data indicative of the digital twin comprising data indicative of a reconfiguration of a physical parameter of the physical system (2), the physical parameter having a digital counterpart in the digital twin; the digital counterpart being reconfigurable.

11. The method of claim 9 or 10, comprising at least one of: reconfiguring the model of the digital twin based on the data indicative of the reconfiguration of the model of the digital twin and reconfiguring the physical parameter based on the data indicative of the reconfiguration of the physical parameter.

12. A method of supervising a physical system (2), the method comprising the method of any one of the previous claims.

13. A device or system comprising means adapted to execute the steps of the method of any one of the previous claims.

14. At least one computing device configured to execute the steps of the method of any one of claims 1 to 12.

15. A computer program product that has instructions which, when the program is executed by at least one computing device, cause the at least one computing device to carry out the steps of the method of any one of claims 1 to 12.
